# EUROPEAN PATENT APPLICATION

(11) **EP 4 717 948 A1**
(43) Date of publication of application: **01.04.2026**
(21) Application number: 25199897.7
(22) Date of filing: 03.09.2025
(51) Int. Cl.: F16J 15/00, F16J 15/16, F16J 15/32, F16J 15/56, F16J 15/18, F16J 15/20, F16J 15/26, F16K 1/42, F16K 31/122, F16K 41/06

(54) **SEAL STRUCTURE**

(30) Priority: 25.09.2024 JP 2024165829
(71) Applicant: Tatsuno Corporation, Tokyo 108-0073 (JP)
(72) Inventor: TAKEZAWA, Masahiro, Tokyo, 108-0073 (JP)
(74) Representative: Isarpatent

(57) **Abstract**

[OBJECT] To provide a seal structure used in a type of valve in which a valve body is formed at the tip of a valve stem, and the valve is closed or opened by moving the valve stem in the central axial direction, in which a multi-stage seal is formed by continuously arranging multiple stages of annular sealing material in the area where the valve stem slides.

[SOLUTION] A seal structure 30 of the present invention is characterized by including a plurality of stages of combinations of: a C-shaped member 32 having a circular ring with a portion cut out in a circumferential direction of the circular ring; a composite member 33 including a hollow cylindrical portion 33A and a flange 33B extending radially outward on a valve body side of the hollow cylindrical portion 33A in a central axis direction of the hollow cylindrical portion 33A, the hollow cylindrical portion 33A being inserted into a central hollow portion of the C-shaped member 32; and a backup ring 34 and an O-ring 35 placed on the flange 33B of the composite member 33.

## Description

### BACKGROUND

### 1. Field of the Invention

The present invention relates to a seal structure used in a shutoff valve or a flow rate regulating valve for a high-pressure fluid such as high-pressure hydrogen gas.

### 2. Description of the Related Art

In shutoff valves and flow rate regulating valves for high-pressure fluids such as high-pressure gases a valve body is provided at the tip of a valve stem, and moving the valve stem in the central axial direction allows the valve body to be seated on a valve seat formed in a flow passage to close the valve, or the valve body to be moved away from the valve seat to open the valve. In such types of valves, the valve stem is sealed with a cup seal or an O-ring to prevent a working fluid from leaking from the point where the valve stem slides (the movable part of the valve stem).

In order to seal the valve stem, it is necessary to use a seamless annular sealing material such as an O-ring or a backup ring, etc. It is difficult however to install such an annular sealing material or a backup ring in the area where the valve stem slides, and there is a problem in that it is not possible to arrange the sealing material continuously in multiple stages to form a multi-stage seal.

As another conventional technique, a shutoff valve with improved sliding properties, sealing properties, and durability in the sliding portion has been proposed in JP6972506B. Although such a conventional technique is useful, it does not solve the above-mentioned problems.

The content of JP6972506B gazette is incorporated herein by reference in its entirety.

### BRIEF SUMMARY

The present invention has been proposed in consideration of the problems of the conventional technology described above, and has an object to provide a seal structure used in a valve of a type in which a valve body is provided at the tip of a valve stem and the valve is closed or opened by moving the valve stem in the direction of a central axis, in which an annular sealing material is continuously arranged in multiple stages in the area where the valve stem slides to form a multi-stage seal.

### [Means for solving the problem]

A seal structure 30 of the present invention is characterized by including a plurality of stages of combinations of: a C-shaped member (C-ring) 32 having a circular ring with a portion cut out in a circumferential direction of the circular ring; a composite member 33 including a hollow cylindrical portion 33A and a flange 33B extending radially outward on a valve body side of the hollow cylindrical portion 33A in a central axis direction of the hollow cylindrical portion 33A, the hollow cylindrical portion 33A being inserted into a central hollow portion of the C-shaped member 32; and a backup ring 34 and an O-ring 35 placed on the flange 33B of the composite member 33.

In a shutoff valve 100 including: a casing 2 having a fluid flow passage 3 formed in a central axis direction; a valve stem 1 disposed in the flow passage 3 and extending in the central axis direction; a valve body 1AT formed at a tip end of the valve stem 1; a valve seat 3AT formed in the casing 2 near an end of the flow passage 3; and a valve closing mechanism 10 for pressing the valve body 1AT against the valve seat 3AT, the valve closing mechanism 10 being composed of an actuator 11 and a valve closing force adjustment mechanism 50A, wherein the valve closing force adjustment mechanism 50A is provided with, in a pressure transmission chamber 5 that accommodates an end of the valve stem 1 opposite to the valve body 1AT, a valve stem actuating shaft 40 that engages with the valve stem 1 and is moved in the central axial direction by the actuator 11, and a pressure adjustment spring 144 that is interposed between the actuator 11 and the valve stem actuating shaft 40 to adjust the pressing force of the valve stem actuating shaft 40, the seal structure 30 is preferably mounted in a flow passage through which the valve stem actuating shaft 40 extends so as to prevent fluid from flowing into the actuator 11 side.

In a flow rate regulating valve 200 including: a cam plate 41 having a slope formed on its surface 41A; a drive source 50 for rotating the cam plate 41 via a reduction mechanism 51; a cam follower 42 having one of a rotating part 42A and a moving part that is pressed against the surface 41A of the cam plate 41 and that moves in a direction of a central axis of the flow rate regulating valve 200 in response to an inclination of the surface 41A of the cam plate 41; and a valve stem support part 43 having an end connected to the cam follower 42 and another end connected to a valve stem 1-1, wherein a flow rate varies depending on a dimension Lt of insertion of the valve stem 1-1 into a small diameter portion of a flow passage 3, the seal structure 30 is preferably mounted in a region where the valve stem 1-1 extending in the central axial direction of the casing 2-1 slides.

### EFFECTS OF THE INVENTION

With the seal structure 30 of the present invention having the above-mentioned configuration, in a hollow portion 31 in which the valve stem 1 slides and in which a plurality of grooves 31A are intermittently formed, the intermittently formed grooves 31A have a large inner diameter, so that the C-shaped member 32 is fitted. The hollow cylindrical portion 33A of the composite member 33 having the hollow cylindrical portion 33A and a flange 33B is inserted into the hollow portion 32A of the C-shaped member 32, and a backup ring 34 and an O-ring 35 are placed on the flange 33B. This allows the O-ring 35, the backup ring 34, the member 33 having the hollow cylindrical portion 33A and the flange 33B, and the C-shaped member 32 to be combined into one unit of seal (C32-35). Since the one-unit seal (C32-35) can be arranged for each of the grooves 31A formed intermittently in the hollow portion 31, the present invention can form a multilayer seal structure in which multiple layers are continuously stacked in the central axial direction of the portion where the valve stem 1 slides. As a result, it becomes possible to easily and reliably form a multi-stage seal structure in the valve stem sliding portion, which was difficult to achieve with the conventional technology.

According to the present invention, there can be provided a seal structure used in a type of valve in which a valve body is provided at the tip of a valve stem and the valve is closed or opened by moving the valve stem in the central axial direction, and in which annular sealing material is continuously arranged in multiple stages in the area where the valve stem slides to form a multi-stage seal.

### BRIEF DESCRIPTION OF THE DRAWINGS

[Figure 1] A cross-sectional view showing an existing seal structure.
[Figure 2] A cross-sectional view showing a seal structure according to an embodiment of the present invention.
[Figure 3] A perspective view of a hollow cylinder-flange composite member used in the seal structure of Fig. 2.
[Figure 4] A perspective view of a C-ring used in the seal structure of Fig. 2;
[Figure 5] A cross-sectional view showing a shutoff valve equipped with the seal structure according to the illustrated embodiment in an open state.
[Figure 6] A partially enlarged cross-sectional view of a part A in Fig. 5.
[Figure 7] A cross-sectional view showing a state immediately after the shutoff valve shown in Fig. 5 is closed.
[Figure 8] A cross-sectional view showing a state after a predetermined time has elapsed since the shutoff valve shown in Fig. 5 was closed.
[Figure 9] A cross-sectional view of a flow rate regulating valve provided with the seal structure according to the illustrated embodiment.
[Figure 10] A cross-sectional view showing the flow rate regulating valve of Fig. 9, taken along a cross section perpendicular to the cross section of Fig. 9.
[Figure 11] An enlarged cross-sectional view showing the relative positions of a shaft tip and a small diameter flow passage portion in the flow rate adjustment valve shown in Figs. 9 and 10 in a small flow rate region state.
[Figure 12] A perspective view of the flow rate regulating valve shown in Figs. 9 and 10.
[Figure 13] A perspective view showing the configuration of Fig. 12 with a casing omitted.
[Figure 14] A perspective view showing a cam plate, a cam follower rod, and a valve stem support portion.
[Figure 15] A view taken along an arrow A15 in Fig. 14.
[Figure 16] A perspective view showing the cam plate.

### DETAILED DESCRIPTION OF THE PREFERRED EMBODIMENTS

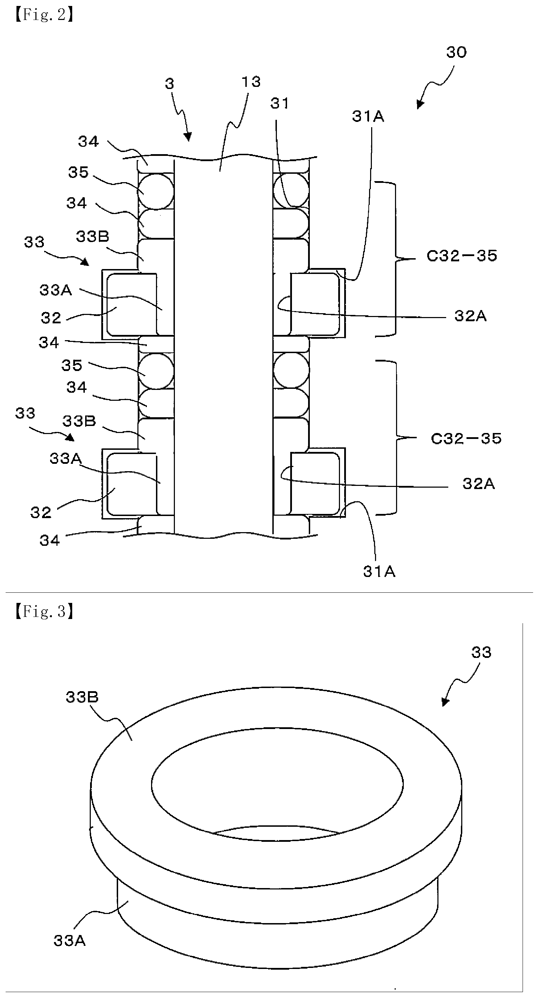

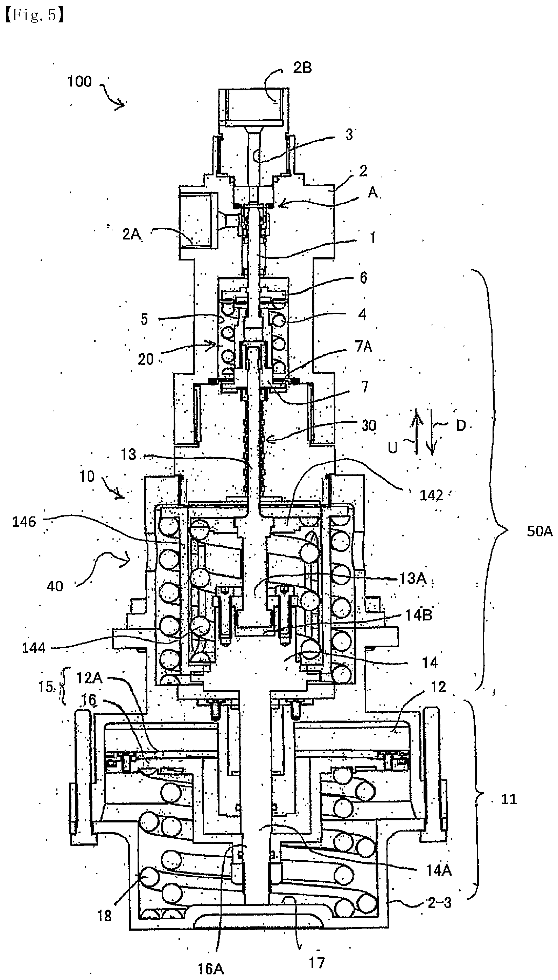

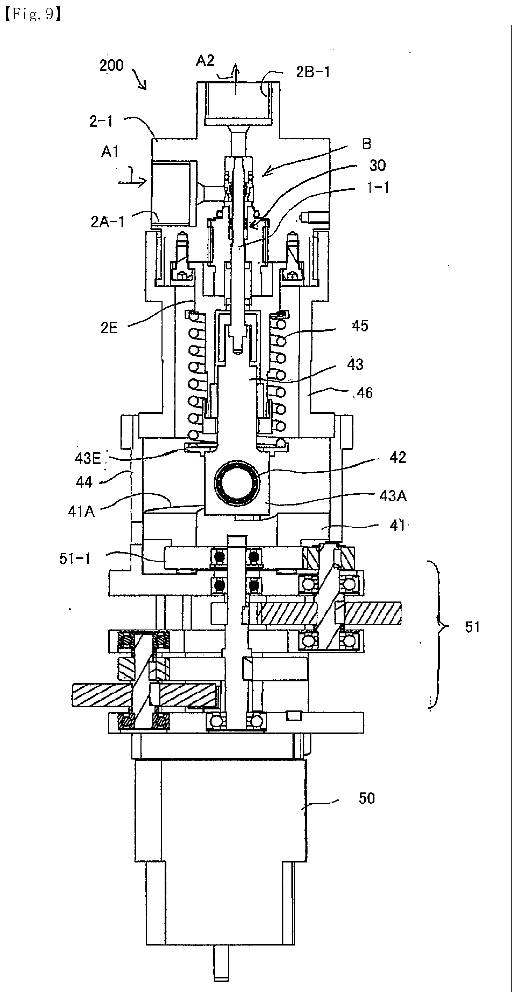

Hereinafter, an embodiment of the present invention will be described with reference to the attached drawings. First, a seal structure 30 according to the illustrated embodiment will be described with reference to Figs. 2 to 4. This seal structure 30 is used, for example, in a shutoff valve 100 to be described later with reference to Figs. 5 to 8 and a flow rate regulating valve 200 to be described later with reference to Figs. 9 to 16. As described later, in the shutoff valve 100 of Figs. 5 to 8 and the flow rate regulating valve 200 of Figs. 9 to 16, valve bodies 1AT, 1AT-1 are provided at the tips of the valve stems 1, 1-1, and the shutoff valve 100 and the flow rate regulating valve 200 are opened and closed by the movement of the valve stems 1, 1-1 in the direction of their central axes. The seal structure 30 shown in Figs. 2 to 4 is provided at the location where the valve stems 1, 1-1 slide within casings 2, 2-1 when they move.

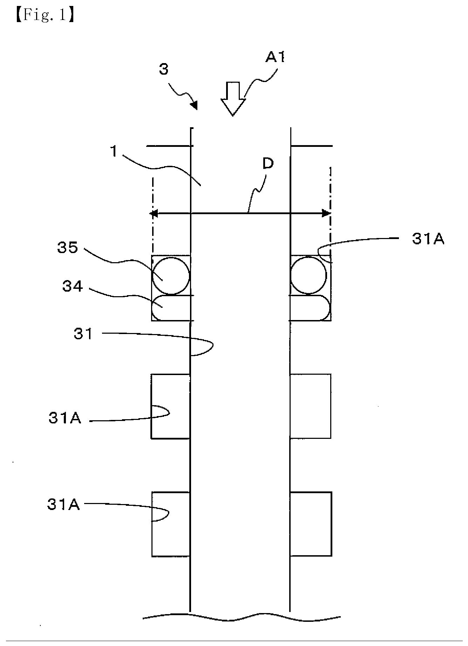

In the prior art also, in order to prevent leakage of a fluid (e.g., high-pressure hydrogen) from the point where the valve stem 1 (1-1) slides in a flow passage 3 of the casing (flowing in as indicated by an arrow A1), a seal material such as an O-ring 35 was arranged at the sliding point as shown in Fig. 1. In order to prevent leakage of high-pressure hydrogen gas from the point where the valve stem 1 slides, it is necessary to provide a multi-stage seal with multiple O-rings 35. In shutoff valves or flow rate regulating valves, a plurality of grooves 31A (enlarged diameter portion) may be formed intermittently in the central axis direction at a point 31 (hole, hollow portion) where the valve stem 1 slides to fit the O-ring 35, which is a seal material. In order to prevent the phenomenon in which the O-ring 35 bites into the gap of the groove portion 31A formed in the sliding portion 31 of the valve stem 1 due to high pressure, that is, the so-called "O-ring protrusion", and to obtain good pressure resistance, the O-ring 35 is used in combination with an annular backup ring 34.

In the prior art shown in Fig. 1, in order to accommodate the O-ring 35 in a groove portion (enlarged diameter portion) 31A provided in the valve stem sliding portion (hollow portion) 31 and combine it with the backup ring 34 to provide multiple stages, the inner diameter of the valve stem sliding portion 31 must be made the same as an inner diameter D of the groove portion 31A in which the O-ring 35 is accommodated. In a state in which the groove 31A is formed discontinuously in a central axial direction, it is impossible to combine the O-ring 35 and the backup ring 34 to provide multiple stages.

In contrast, in the seal structure 30 according to the illustrated embodiment, as shown in Fig. 2, a combination of an O-ring 35, a backup ring 34, a hollow cylinder-flange composite member 33, and a C-ring 32 is stacked in multiple stages in the central axis direction of a hollow portion 31. In Fig. 2, a flow passage 3 for a working fluid is formed in the central axis direction of a casing (not shown), and a valve stem 1 and the like extend therethrough. In the flow passage 3, a plurality of regions (enlarged diameter portions) 31A with a large inner diameter are formed intermittently at equal intervals in the central axis direction in the hollow portion 31 in which the valve stem 1 and the like slide (two locations in the example of Fig. 2). The seal structure 30 in Fig. 2 is disposed in a region in which the valve stem actuation shaft 13 slides in the central axis direction in a hollow portion of a shutoff valve 100 (Figs. 5, 7, and 8), for example.

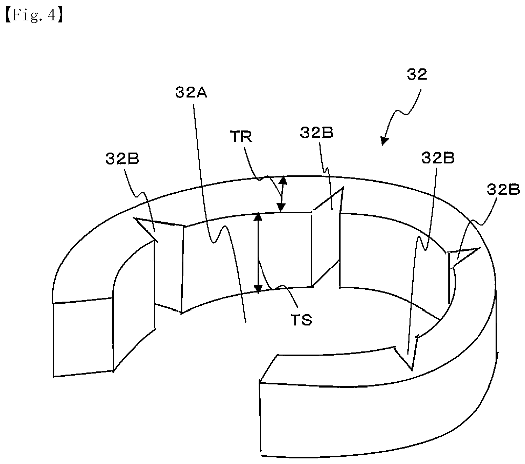

When the seal structure 30 is installed in the hollow portion 31 where the valve stem actuation shaft 13 (valve stem 1, etc.) slides, a C-ring 32 is arranged and fitted in the expanded diameter portion 31A of the hollow portion 31, and the C-ring 32 has a shape in which a part of the circumferential direction of the annular ring is cut out. The hollow cylinder/flange composite member 33 is placed above the C-ring 32. When placing the hollow cylinder/flange composite member 33, a hollow cylindrical region 33A extending in the central axis direction (up and down direction) of the hollow cylinder/flange composite member 33 is inserted into the hollow portion 32A formed at the radial center of the C-ring 32. The backup ring 34, O-ring 35, and backup ring 34 are placed in this order on the flange 33B of the hollow cylinder/flange composite member 33. That is, two backup rings 34 are placed on the flange 33B of the hollow cylinder/flange composite member 33 with the O-ring 35 sandwiched therebetween. The C-ring 32 in the adjacent combination (the combination of the O-ring 35, the backup ring 34, the hollow cylinder/flange composite member 33, and the C-ring 32) is placed above the backup ring 34 placed above the O-ring 35. With this configuration, it is possible to easily and reliably install the seal structure 30 stacked in multiple stages in the central axial direction in the hollow portion 31. The backup ring 34, the hollow cylinder/flange composite member 33, and the C-ring 32 will be described later with reference to Figs. 3 and 4.

A combination (unit) consisting of an O-ring 35, two backup rings 34, a hollow cylinder-flange composite member 33, and a C-ring 32 is indicated by the symbol C32-35. The seal structure 30 is configured by providing multiple stages of such units C32-25. Figure 2 shows a state in which a units C32-35 are stacked in two stages. Adopting the seal structure 30 having such a configuration enables to arrange multiple stages of seals and reliably prevent leakage of high-pressure hydrogen gas without increasing the inner diameter of the hollow portion 31 in which the valve stem actuation shaft 13 (valve stem 1, etc.) slides. Here, since the unit C32-25 includes the backup ring 34, the phenomenon in which the O-ring 35 is bitten into the gap of the sliding portion of the valve stem 1, etc. due to high pressure (O-ring protrusion) is prevented. Although not shown, a cup seal can be used instead of the O-ring 35. In that case, it is preferable to arrange the cup seal with the top of Fig. 2 open.

The seal structure 30 can be provided, for example, in the flow passage 3 in the shutoff valve 100 described in Figs. 5 to 8. The seal structure 30 can also be provided in the flow passage 3-1 in the flow rate adjustment valve 200 described in Figs. 9 to 16.

The backup ring 34 is made of resin. As described above, the backup ring 34 fills the gap between the inner wall of the flow passage 3 and the O-ring 35, and prevents a phenomenon in which a part of the O-ring 35 extends due to high pressure and enters the gap with the inner wall of the flow passage 3 (protrusion of the O-ring), and prevents the O-ring 35 from rupturing at the entered part. In order to reliably prevent such "protrusion" of the O-ring 35, in the illustrated embodiment, two backup rings 34 are arranged to sandwich the O-ring 35 from above and below.

The hollow cylinder/flange composite member 33 will be described with reference to Fig. 3. The composite member 33 is made of metal and has a hollow cylindrical body 33A extending in the central axis direction (up and down direction) and a flange 33B (the flange 33B at the upper edge of the body 33A) located above the body 33A and extending radially outward. When assembling the composite member 33, the body 33A is inserted into the hollow portion 32A of the C-ring 32. This prevents the C-ring 32 from shrinking radially inward.

The C-ring 32 will be described with reference to Fig. 4. The C-ring 32 is made of metal, and is cut out at a number of locations at approximately equal intervals in a circumferential direction to form a number of slits 32B (four in Fig. 3). Forming the slits 32B allows the C-ring 32 to be easily reduced in the radial direction, making it easier to insert it into the flow passage 3. The number of slits 32B may be other than four (for example, two to six). Here, a large number of slits 32B means that the radial dimension of the C-ring 32 is large, and when the radial dimension of the C-ring 32 is large, the inner diameter of the hollow portion 31 is also large, so that the backup ring 34 can be inserted into the hollow portion 31 by distorting the backup ring 34. If the backup ring 34 can be inserted into the hollow portion 31, there is no need to adopt the seal structure 30 according to the illustrated embodiment. Therefore, there is no need to increase the number of slits 32B more than necessary.

The thickness TS of the C-ring 32 in the central axis direction (the vertical direction in Figs. 2 and 4) is set to be thicker than the thickness TR in the radial direction. The ratio of the radial thickness TR of the C-ring 32 to the thickness TS in the central axis direction is set in the range of 1:1 to 1:10. If the axial thickness TS of the C-ring 32 is thick, the C-ring 32 is less likely to contract in the radial direction, and if the central axis thickness TS is thin, the C-ring 32 cannot resist the shear force acting in the central axis direction. In Fig. 4, the radial thickness of the C-ring 32 is thin at the slit 32B, but since the flange 33B of the hollow cylinder-flange composite member 33 covers the C-ring 32, even if the radial dimension at the slit 32B is thin, the flange 33B bears the load acting in the central axis direction, so there is no problem.

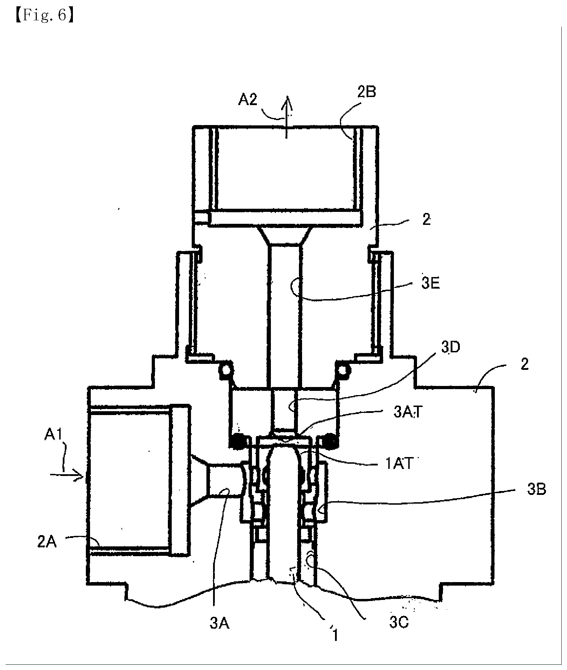

Next, with reference to Figs. 5 to 8, a case where the seal structure 30 according to the embodiment of the present invention described in Figs. 2 to 4 is used in a shutoff valve 100 will be described. The shutoff valve 100 is used in, for example, a filling device for filling a fuel cell vehicle (FCV) with high-pressure hydrogen gas. Figures 5 and 6 show the shutoff valve 100 according to the illustrated embodiment in an open state. In Fig. 5, the shutoff valve 100 has a casing 2 in which a flow passage 3 (3A to 3E: see Fig. 6) for high-pressure hydrogen gas extending in the central axis direction (up and down direction in Fig. 5) is formed, a valve stem 1 disposed in the flow passage 3 and extending in the central axis direction, a valve body 1AT (tapered portion: see Fig. 6) formed at the tip end of the valve stem 1 (upper end of the valve stem 1), a valve seat 3AT (tapered portion: see Fig. 6) formed near the end of the flow passage 3 in the casing 2 (near the lower end of the flow passage 3D in Fig. 6), and a valve closing mechanism 10 that presses the valve body 1AT against the valve seat 3AT. The seal structure 30 described with reference to Figs. 2 to 4 is provided on the sliding portion of the valve stem actuation shaft 13.

In Fig. 5, the valve closing mechanism 10 includes an actuator 11 and a valve closing force adjustment mechanism 50A. The actuator 11 is provided near the end of the flow passage 3 on the opposite side to the valve seat 1AT in the central axis direction (lower in Fig. 1), and has a function of moving the valve stem 1 in the central axis direction. The valve closing force adjustment mechanism 50A includes an elastic repulsive force vanishing device 20 and a valve stem actuation shaft accommodating device 40. The elastic repulsive force vanishing device 20 has a function of vanishing the elastic repulsive force of the spring 4 having an elastic repulsive force in a direction to seat the valve stem 1 on the valve seat 3AT. The actuator 11 includes an actuator driving fluid supply section 12 to which an actuator driving fluid (e.g., high-pressure air, high-pressure hydrogen gas) is supplied or discharged, and a transmission member 15. The transmission member 15 includes a fluid supply section bottom 12A and a spring pressing section 16, and transmits the supply or discharge of the actuator driving fluid to the actuator driving fluid supply section 12 to the shaft support member 14, converting it into a movement in the central axis direction. The reference numeral 2-3 denotes an actuator side casing.

In the actuator 11, a shaft supporting member actuating spring 18 is disposed below the transmission member 15 so as to surround the shaft 14A of the shaft support member 14, and the shaft 14A is connected to the spring pressing portion 16 via a connecting portion 16A. The spring 18 urges the shaft support member 14 upward in the central axial direction via the transmission member 15 and the shaft 14A by its elastic repulsive force, and urges the valve stem actuating shaft 13 and the valve stem 1 upward in the central axial direction. In the state of Fig. 5, driving fluid is supplied to the actuator driving fluid supply portion 12, and the thickness of the actuator driving fluid supply portion 12 in the central axial direction (vertical direction) is large.

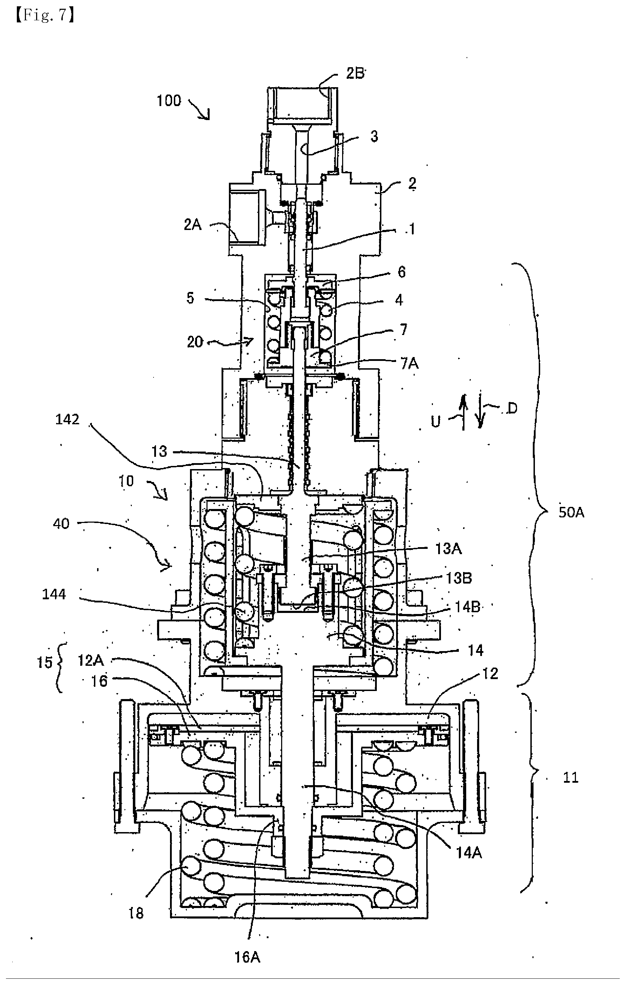

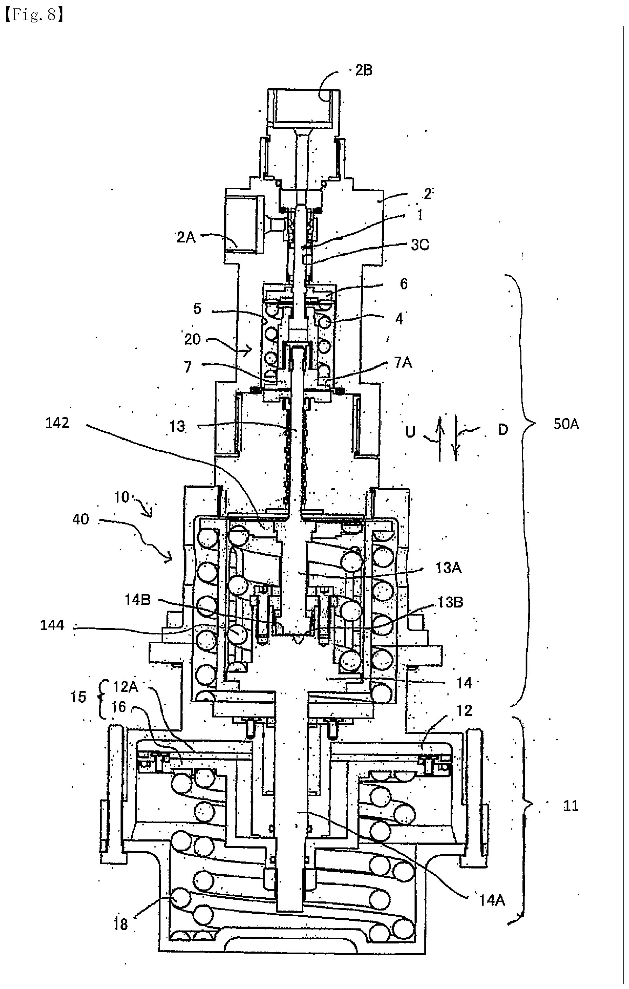

The shaft 14A of the shaft support member 14 is disposed in the valve stem actuation shaft accommodation device 40 provided at a position intermediate between the actuator 11 and the elastic repulsive force vanishing device 20. The shaft support member 14 is configured to have a larger diameter than the shaft 14A and supports the valve stem actuation shaft 13. The valve stem actuation shaft 13 is connected to the valve stem 1 and extends in the central axis direction. When the shutoff valve 100 shown in Fig. 1 is opened, the lower end of the shaft 14A abuts against the stopper 17 at the lower end of the actuator 11. On the other hand, when the shutoff valve 100 shown in Figs. 7 and 8 is closed, the lower end of the shaft 14A is separated from the stopper 17. A shaft support member recess 14B is formed at the upper part of the shaft support member 14, and a base 13A of the valve stem actuation shaft 13 is accommodated in the shaft support member recess 14B, and the shaft support member 14 and the valve stem actuation shaft 13 are connected. The valve stem actuation shaft accommodating device 40 is provided with a pressure adjustment spring 144, which is disposed in a hollow accommodation portion 146 and surrounds the shaft support member 14 and the base 13A of the valve stem actuation shaft 13. The lower portion of the pressure adjustment spring 144 abuts the bottom of the hollow accommodation portion 146, and the upper portion of the pressure adjustment spring 144 abuts the valve stem actuation shaft engaging portion 142. The valve stem actuation shaft engaging portion 142 engages with the base 13A of the valve stem actuation shaft 13. In Fig. 5, the valve closing mechanism 10 has a pressure transmission chamber 5, and the pressure transmission chamber 5 accommodates the end of the valve stem 1 opposite to the valve body 1AT and the end of the valve stem actuation shaft 13 on the valve stem 1 side. The pressure transmission chamber 5 is provided with a valve stem engaging portion 6 that engages with the valve stem 1, and one end (upper end) of the spring 4 is fixed to the valve stem engaging portion 6. A spring lower end support member 7 is housed in the pressure transmission chamber 5, and the spring lower end support member 7 has a flange 7A that can come into contact with the other end of the spring 4. The spring lower end support member 7 houses the end of the valve stem actuation shaft 13 on the valve stem 1 side, and the valve stem actuation shaft 13 and the valve stem 1 are connected via the valve stem engagement portion 6 and the spring lower end support member 7.

The elastic repulsive force vanishing device 20 has a pressure transmission chamber 5, a spring 4, and a spring lower end support member 7. A high-pressure hydrogen gas from a filling device (not shown) flows into the pressure transmission chamber 5 via the suction port 2A, the suction port side flow passage 3A, the flow passage space 3B and the valve actuation flow passage 3C (Fig. 6) of the casing 2, and fluid pressure acts on the pressure transmission chamber 5. The spring lower end support member 7 moves in a direction away from the spring 4 when the pressure in the pressure transmission chamber 5 rises above a predetermined value (set on a case-by-case basis depending on the elastic repulsive force of the spring 4), and comes into contact with the spring 4 when the pressure in the pressure transmission chamber 5 is equal to or lower than the predetermined value.

In Fig. 5, a high-pressure hydrogen gas flows into the shutoff valve 100 from the suction port 2A and is discharged from the discharge port 2B toward the downstream (FCV) equipment. Details of the high-pressure hydrogen gas flow passage 3 that communicates from the suction port 2A to the discharge port 2B are shown in Fig. 6. In Fig. 6, the casing 2 is formed with the suction port 2A for high-pressure hydrogen gas, and the suction port 2A communicates with the valve actuation flow passage 3C via the suction port side flow passage 3A and the flow passage space 3B. The flow passage space 3B also leads to the discharge port 2B via the discharge port side flow passages 3D and 3E. The metal valve stem 1 is disposed in the hollow portion of the valve actuation flow passage 3C and the flow passage space 3B of the casing 2, and the tip (upper end in Fig. 6) of the valve stem 1 constitutes a valve body 1AT having a tapered surface. A tapered surface is formed at the end of the flow passage space 3B side of the discharge port side flow passage 3D, and constitutes a valve seat 3AT. The valve seat 3AT and the valve body 1AT constitute a shutoff valve.

In the open state of the shutoff valve shown in Figs. 5 and 6, the tapered surface forming the valve seat 3AT and the tapered surface constituting the valve body 1AT are separated. On the other hand, in the closed state of the shutoff surface shown in Figs. 7 and 8, the tapered surface constituting the valve body 1AT is seated on the valve seat 3AT. Figure 6 shows the open state of the shutoff valve, in which a high-pressure hydrogen gas (arrow A1) supplied from the suction port 2A flows into the flow passage space 3B and is discharged from the discharge port 2B toward the equipment on the downstream side (FCV side) via the discharge port side flow passages 3D and 3E (arrow A2).

To change the shutoff valve 100 shown in Fig. 5 from the closed state shown in Fig. 7 and Fig. 8 to the open state shown in Fig. 5, an actuator driving fluid is supplied to the actuator driving fluid supply unit 12. The fluid pressure of the supplied driving fluid causes the fluid supply unit bottom 12A and the spring pressing unit 16 to descend in the direction of an arrow D against the elastic repulsive force of the shaft support member actuating spring 18. When the spring pressing unit 16 descends, the shaft support member 14 descends in the direction of the arrow D, and the valve stem actuating shaft 13 connected to the shaft support member 14 also descends in the direction of the arrow D. The valve stem 1 connected to the valve stem actuating shaft 13 via the valve stem engagement unit 6 and the spring lower end support member 7 also descends in the direction of the arrow D. As the valve stem 1 descends, the valve body 1AT (Fig. 6) separates from the valve seat 3AT (Fig. 6), and the shutoff valve 100 opens.

In the shutoff valve 100 of Fig. 5, Fig. 7 shows a state immediately after the shutoff valve 100 is closed from a state in which a high pressure hydrogen gas flows and high pressure acts on the flow passage space 3B (Fig. 6). To close the shutoff valve 100 from the open state shown in Fig. 5 to the state shown in Fig. 7, the actuator driving fluid (e.g., high pressure air, high pressure hydrogen gas) is discharged from the actuator driving fluid supply part 12. The discharge reduces the pressure in the actuator driving fluid supply part 12, and the fluid supply part bottom part 12A and the spring pressing part 16 rise in the direction of an arrow U due to the elastic repulsive force of the shaft support member operating spring 18. When the spring pressing part 16 rises, the shaft support member 14, the valve stem operating shaft 13, and the valve stem 1 connected to the valve stem operating shaft 13 also rise in the direction of the arrow U.

When the spring pressing portion 16 rises, the shaft support member 14 rises in the direction of the arrow U, and the elastic repulsive force of the pressure adjustment spring 144 acts on the base 13A of the valve stem actuation shaft 13 via the valve stem actuation shaft engagement portion 142, causing the valve stem actuation shaft 13 to rise in the direction of the arrow U. As a result, the spring lower end support member 7 presses the valve stem engagement portion actuation spring 4, and the elastic repulsive force of the valve stem engagement portion actuation spring 4 raises the valve stem 1 via the valve stem engagement portion 6. As the valve stem 1 rises, the valve body 1AT (Fig. 6) at the tip of the valve stem 1 sits on the valve seat 3AT (Fig. 6), and the shutoff valve 100 closes. In other words, as the valve stem actuation shaft 13 rises in the direction of the arrow U, the elastic repulsive forces of the pressure adjustment spring 144 and the valve stem engagement portion actuation spring 4 act, and in cooperation with the pressure of the high-pressure hydrogen gas, the shutoff valve 100 closes.

According to the shutoff valve 100 of the embodiment shown in the figures, when a predetermined time has elapsed from the state shown in Fig. 7, the elastic repulsive forces of the valve stem engagement portion actuating spring 4 and the pressure adjustment spring 144 disappear. The mechanism by which the elastic repulsive forces of the valve stem engagement portion actuating spring 4 and the pressure adjustment spring 144 disappear will be described with reference to Figs. 6 and 8, which shows a state after a predetermined time has elapsed since the shutoff valve 100 was closed. As shown in Fig. 7, even when the valve body 1AT (Fig. 6) at the tip of the valve stem 1 is seated on the valve seat 3AT (Fig. 6) and the shutoff valve 100 is closed, the high-pressure hydrogen gas supplied to the suction port 2A in Fig. 6 flows through the suction port side flow passage 3A and the flow passage space 3B, through the valve actuation flow passage 3C, and into the pressure transmission chamber 5. The pressure of the high-pressure hydrogen gas acts on the flange 7A of the spring lower end support member 7, causing the flange 7A of the spring lower end support member 7 to move down in the direction of the arrow D.

When the flange 7A of the spring lower end support member 7 descends in the direction of the arrow D by more than a predetermined amount, as shown in Fig. 8, the actuator 11 side end (lower end) of the valve stem engagement portion actuating spring 4 separates from the flange 7A of the spring lower end support member 7. As a result, the valve stem engagement portion actuating spring 4 is released from its compressed state and enters an expanded state, and the elastic repulsive force lifting the valve stem engagement portion 6 in the direction of the arrow U disappears. When the valve stem engagement portion actuating spring 4 expands and the flange 7A of the spring lower end support member 7 descends in the direction of the arrow D, the valve stem actuating shaft 13 is also pushed down. As a result, the shaft support member 14 also descends in the direction of the arrow D, so that the pressure adjustment spring 144 expands and its elastic repulsive force disappears. As a result, the force with which the tapered surface 1AT (valve body, Fig. 2) at the tip of the valve stem 1 seats on the tapered surface 3AT (Fig. 2) to close the shutoff valve 100 is reduced by the elastic repulsive force of the valve stem engagement portion actuation spring 4 and the elastic repulsive force of the pressure adjustment spring 144, and becomes only the pressure of the high-pressure hydrogen gas. And, since it is reduced by the elastic repulsive forces of the valve stem engagement portion actuation spring 4 and the pressure adjustment spring 144, damages to the valve body 1AT and valve seat 3AT are reduced. Although not shown in the drawings, in the illustrated embodiment, instead of fluid pressure, it is also possible to open and close the shutoff valve with an electric motor.

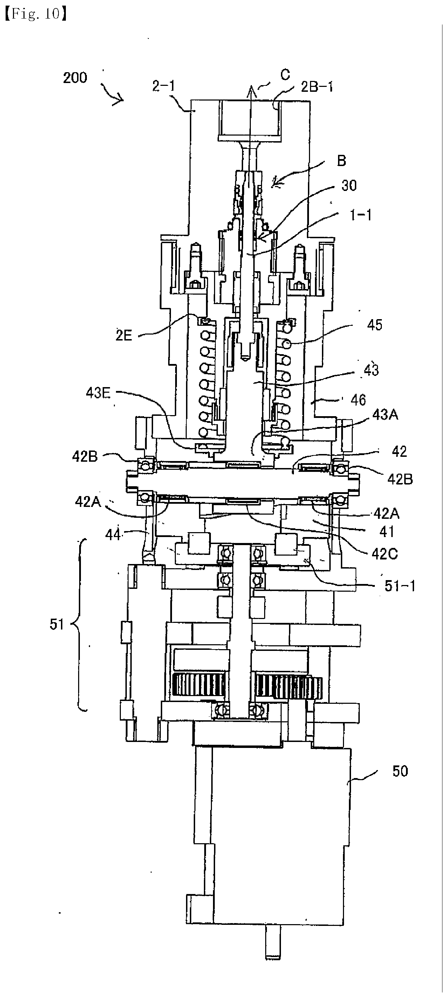

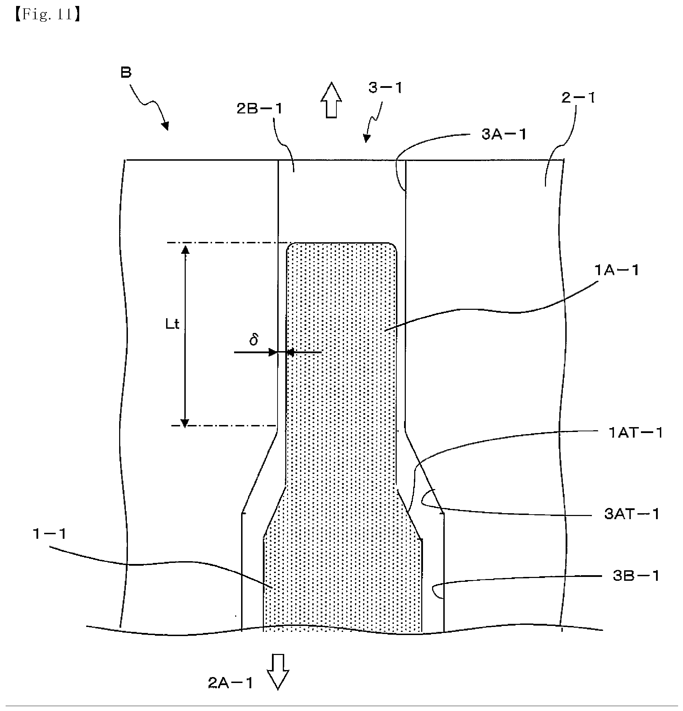

Next, referring to Figs. 9 to 16, a flow rate regulating valve 200 using the seal structure 30 described in Figs. 2 to 4 will be described. Here, the seal structure 30 is shown in Figs. 9 and 10. The flow rate regulating valve 200 shown in Figs. 9 to 16 is also used in a filling device that fills a fuel cell vehicle (FCV) with high-pressure hydrogen gas. In Fig. 9, high-pressure hydrogen gas flows in from an inlet 2A-1 (arrow A1) and is supplied downstream of an outlet 2B-1 via a flow passage adjustment unit B (arrow A2). The flow passage adjustment unit B has a valve body 1AT-1 (Fig. 11) and a valve seat 3AT-1 (Fig. 11), and has a function of adjusting the valve opening degree to adjust the flow rate. Details of the flow passage adjustment unit B will be described later with reference to Fig. 11. In Figs. 9 and 10, the seal structure 30 is provided in an area where a valve stem 1-1 extending in the central axis direction of a main body casing 2-1 slides.

In Figs. 9 and 10, the flow rate regulating valve 200 has a main body casing 2-1 in which a flow passage 3-1 (Fig. 11) constituting the flow passage adjustment section B is formed, a valve stem 1-1 having a tip 1A-1 (Fig. 11), a valve stem support section 43 supporting the valve stem 1-1, a cam plate 41 with a slope formed on a surface 41A (cam plate surface: Fig. 9), a cam follower rod (cam follower) 42, and an electric motor (drive source) 50 that rotates and drives the cam plate 41 via a reduction mechanism 51. A spring 45 is interposed between an abutment section 2E on the main body 2-1 side and an abutment section 43E of the valve stem support section 43, and the cam follower rod 42 is constantly pressed toward the cam plate 41 by the spring 45 so that the cam follower rod 42 does not move away from the cam plate surface 41A. A reference numeral 44 denotes a cam plate side casing, and a reference numeral 46 denotes a valve stem support section casing.

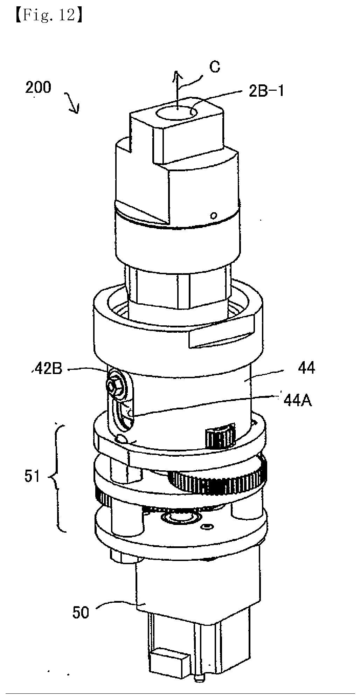

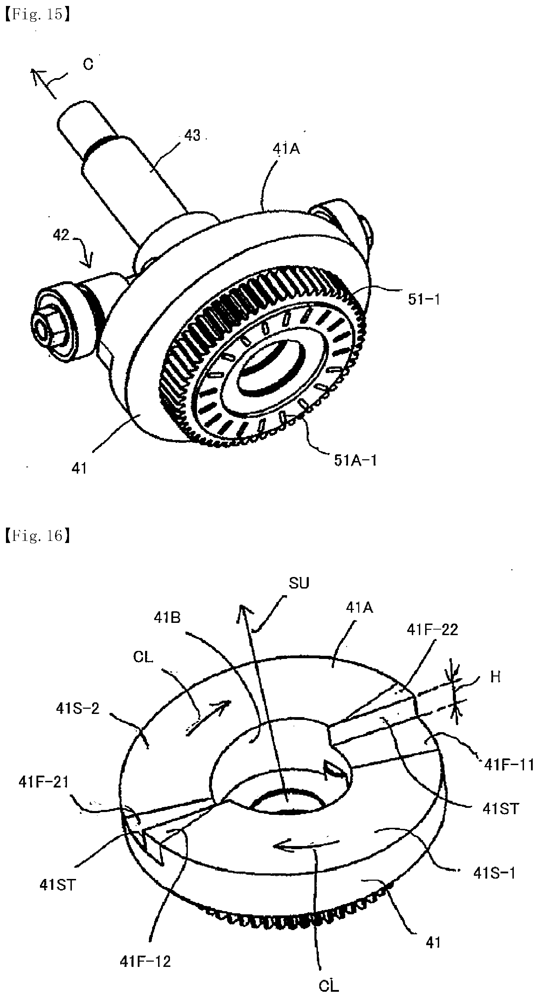

As will be described later with reference to Fig. 16, a sloping surface is formed on the surface 41A of the cam plate 41 (the upper surface in Figs. 9 and 10), and the lower surface is flat. The thickness of the cam plate 41 in the central axis direction changes smoothly along the circumferential direction of the cam plate 41. The cam follower rod 42 is configured as a rod as a whole, and is provided with cam plate contact bearings 42A (e.g., roller bearings: Fig. 10) near both ends. The cam plate contact bearings 42A are rotatably pressed against the surface 41A of the cam plate 41. The cam follower rod 42 has long hole contact bearings 42B (e.g., ball bearings: Fig. 10) at both ends, and the long hole contact bearings 42B are inserted into long holes 44A (Fig. 12) formed in the cam plate side casing 44, and are configured to move smoothly in the longitudinal direction (up and down) within the long holes 44A.

The cam follower rod 42 is connected to a base 43A of a valve stem support part 43 extending in the direction of the central axis C (Fig. 10) at a position corresponding to the center of the cam plate 41 via a connecting part bearing 42C (e.g., a roller bearing: Fig. 10). The other end of the valve stem support part 43 is connected to the valve stem 1-1. When the cam plate 41 is rotationally driven by the electric motor 50 and the reduction mechanism 51, the cam follower rod 42 and the valve stem support part 43 move in the direction of the central axis C due to the inclination of the surface 41A of the cam plate 41, and the valve opening degree of the flow rate regulating valve 200 is adjusted. Although not clearly shown, a control unit CU is provided that controls the flow rate of the flow rate regulating valve 200 based on the amount of rotation of an output shaft of the electric motor 50.

With reference to Fig. 11, the flow passage adjustment section B in Figs. 9 and 10 will be described in detail. In Fig. 11, a flow passage 3-1 is formed in the main body 2-1, and the flow passage 3-1 has a flow passage small diameter section 3A-1 communicating with the flow outlet 2B-1, a flow passage large diameter section 3B-1 communicating with the flow inlet 2A-1, and a flow passage tapered section 3AT-1 connecting the two. The flow passage tapered section 3AT-1 constitutes a valve seat. A valve stem tip tapered section 1AT-1 is formed on the inlet 2A-1 side (lower side in Fig. 11) of the valve stem tip 1A-1, and the valve stem tip tapered section 1AT-1 is continuous with the valve stem 1-1. The valve stem tip tapered section 1AT-1 constitutes a valve body. In Fig. 11, there is a circular gap δ of a minute radial dimension between the outer periphery of the valve stem tip 1A-1 and the inner circumferential surface of the flow passage small diameter section 3A-1, when the flow rate regulating valve 200 is open and hydrogen flows through the annular gap δ, the hydrogen flow rate passing through the flow rate regulating valve 200 is small. The valve stem axial length Lt at which the valve stem tip 1A-1 is inserted into the flow passage small diameter portion 3A-1 is the distance that hydrogen gas flows through the annular gap δ, and the flow passage resistance of the flow passage formed by the annular gap δ varies depending on the length Lt, and the hydrogen gas flow rate varies. When the valve stem tip 1A-1 is located in the flow passage large diameter portion 3B-1, the hydrogen flow rate passing through the flow rate regulating valve 200 is large.

Adjusting the valve stem axial length Lt allows the flow rate regulating valve 200 to continuously transfer between a valve closed state (a state in which the valve stem tip tapered portion 1AT-1 is seated on the flow passage tapered portion 3AT-1), a small flow rate state (a state as shown in Fig. 11), and a large flow rate state (a state in which the valve stem tip 1A-1 is located in the flow passage large diameter portion 3B-1). Continuously and smoothly changing the length Lt to vary the flow passage resistance causes hydrogen gas to flow at a small flow rate immediately after opening from the closed state, and the small flow rate to gradually increase, and when the valve stem tip 1A-1 is located in the flow passage large diameter portion 3B-1, the hydrogen gas flow rate increases rapidly.

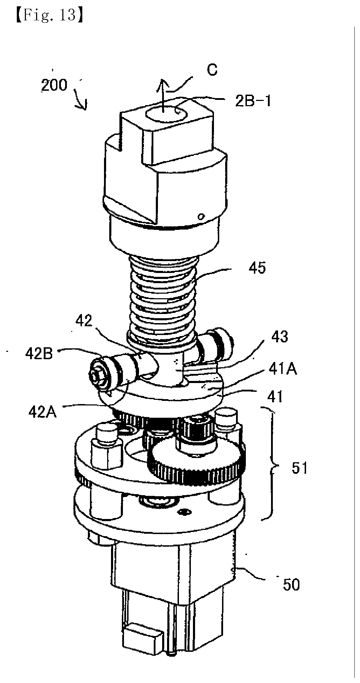

In Fig. 12, long holes 44A are formed on both side surfaces of the cam plate side casing 44, and long hole contact bearings 42B arranged on the ends of the cam follower rods 42 (see Fig. 13) are inserted into the long holes 44A. With this configuration, when the cam plate 41 (Fig. 13) rotates due to the rotation of the electric motor 50, the valve stem support portion 43 (Fig. 13) and the valve stem 1 (Figs. 9 and 10) are prevented from rotating about their central axis, and the valve stem 1 is prevented from not moving in the central axis direction (arrow C direction).

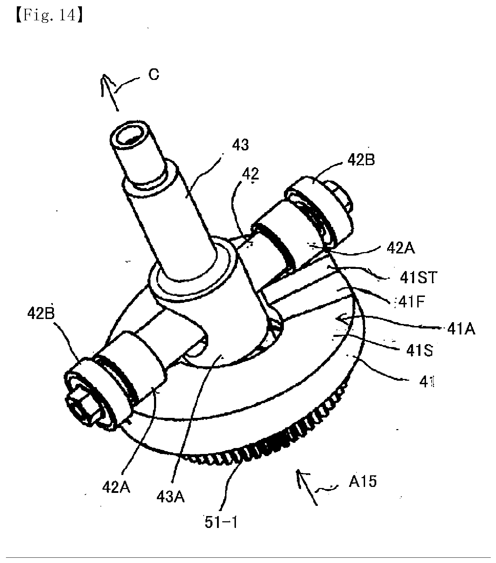

In Figs. 13 and 14, a cam contact bearing 42A and a long hole contact bearing 42B are provided at both ends of the cam follower rod 42, and the cam follower rod 42 is pressed against the surface 41A of the cam plate 41 via the cam plate contact bearing 42A. In Fig. 14, the cam plate surface 41A has an inclined surface 41S, a flat surface 41F, and a step portion 41ST. The inclination formed on the cam plate surface 41A will be described later with reference to Fig. 16.

In Figs. 14 and 15, a gear 51-1, which is the gear that constitutes the reduction mechanism 51 and is closest to the cam plate 41, is integrated with the cam plate 41. When the cam plate 41 rotates, the two cam plate contact bearings 42A near both ends of the cam follower rod 42 are pressed by the inclination of the cam plate surface 41A (two inclinations that are point symmetrical about the center point of the cam plate surface 41A), and the cam follower rod 42 moves in the direction of the central axis C in Figs. 13 and 14. If the cam follower rod 42 moves in the direction of the central axis C, the valve stem tip 1A-1 and the valve body 1AT-1 (Fig. 11) also move in the direction of the central axis C, and the dimension Lt (Fig. 11) by which the valve stem tip 1A-1 is inserted into the flow passage small diameter portion 3A-1 (Fig. 11) changes, and the valve opening degree of the flow rate regulating valve 200 changes. Controlling the rotation angle of the cam plate 41 allows the valve opening degree of the flow rate regulating valve 200 to be controlled.

In Fig. 15, the gear 51-1, which is the gear in reduction mechanism 51 closest to the cam plate 41, is integrated with the cam plate 41. A thrust bearing 51A-1 is provided on the surface of the gear 51-1 opposite to the cam plate 41 side (the lower surface in Fig. 10), allowing smooth and reliable operation even when high pressure is applied.

The inclination (and flat surface) formed on the surface 41A of the cam plate 41 and corresponding to the movement (displacement) of the valve stem 1-1 will be described with reference to Fig. 16. In Fig. 16, two inclined surfaces 41S-1 and 41S-2 of the same shape are formed on the cam plate 41. Flat surfaces 41F-11 and 41F-12 are formed adjacent to the inclined surface 41S-1 in the circumferential direction, and flat surfaces 41F-21 and 41F-22 are formed adjacent to both ends of the inclined surface 41S-2 in the circumferential direction. The inclined surfaces 41S-1 and 41S-2, the flat surfaces 41F-11 and 41F-12, and the flat surfaces 41F-21 and 41F-22 are point symmetrical with respect to the center of the cam plate 41. Two cam plate contact bearings 42A (Figs. 10, 13, and 14) disposed near both ends of the driven rod 42 are pressed against the two inclined surfaces 41S-1 and 41S-2.

In Fig. 16, the flat surface 41F is provided to prevent valve opening degree from being unexpectedly adjusted when the electric motor 50 rotates too much and the cam plate 41 rotates too much. This prevents damages to the valve seat 3AT-1 and the valve stem 1-1. Each of the inclined surfaces 41S-1 and 41S-2 gradually protrudes (in the direction of the arrow SU) from the same height as each of the flat surfaces 41F-11 and 41F-21 in the central axis direction (the direction of the arrow SU in Fig. 16) relative to the flat surfaces 41F-11 and 41F-21 as it progresses in the circumferential direction (arrow CL). The inclined surfaces 41S-1 and 41S-2 pass the position where they protrude most in the direction of the arrow SU and reach the flat surfaces 41F-12 and 41F-22. At the boundary between the flat surface 41F-12 and the flat surface 41F-21 and at the boundary between the flat surface 41F-22 and the flat surface 41F-11, a step 41ST is formed, and the height of the step 41ST in the direction of the arrow SU is indicated by a symbol H. The height H of the step 41ST is the displacement amount of the position of the valve stem tip 1A-1 shown in Fig. 11, and is equal to the movement amount of the valve stem tip 1A-1 from the closed position of the flow rate regulating valve 200 to the high flow position (the movement distance in the central axis direction of the valve stem 1-1 when the flow rate regulating valve 200 is rapidly opened).

With reference to Fig. 16, the manner of valve opening and closing control of the flow rate regulating valve 200 by the rotation of the cam plate 41 will be described for each of the normal valve opening and closing and the rapid valve opening. In the normal valve opening and closing, the valve opening degree of the flow rate regulating valve 200 is adjusted according to the amount of protrusion of the inclined surface 41S toward the valve stem 1-1 side at the contact position between the cam plate contact bearing 42A and the inclined surface 41S (the amount of protrusion toward the arrow SU side in Fig. 16). That is, when the "protrusion amount" increases (when the contact position between the cam plate contact bearing 42A and the inclined surface 41S moves in the direction of the arrow CL), the flow rate regulating valve 200 moves in the direction to close. On the other hand, when the "protrusion amount" decreases (when the contact position between the cam plate contact bearing 42A and the inclined surface 41S moves in the opposite direction to the arrow CL), the flow rate regulating valve 200 moves in the direction to open. When the contact position between the cam plate contact bearing 42A and the inclined surface 41S advances in the valve closing direction and reaches the boundary with the flat surface 41F-12 or 41F-22, the flow rate adjustment valve 200 is closed. On the other hand, when the contact position between the cam plate contact bearing 42A and the inclined surface 41S advances in the valve opening direction and reaches the boundary with the flat surface 41F-11 or 41F-21, the flow rate adjustment valve 200 is opened.

In the case of rapid opening of the valve, when the cam plate 41 is rotated and the contact position between the cam plate contact bearing 42A and the inclined surface 41S moves from the boundary with the flat surface 41F-11 or 41F-21 beyond the step portion 41ST to the flat surface 41F-11 or 41F-21, the regulating valve 200 transitions from the closed state to the open state rapidly. In the flow rate regulating valve 200 shown in Figs. 9 to 16, the cam follower rod 42 may be omitted and the electric motor 50 side end (lower end) of the cam follower rod 42 may be configured to contact and slide at a position biased radially outward from the center of the cam plate surface 41A. In this case, it is preferable that the electric motor 50 side end of the cam follower rod 42 constitutes a rolling bearing or a sliding bearing.

It should be noted that the illustrated embodiment is merely an example and is not intended to limit the technical scope of the present invention.

### [Explanation of symbols]

1, 1-1 valve stems
1AT, 1AT-1 valve bodies
2, 2-1 casings (main body casings)
3, 3-1 flow passages
3A-1 small diameter flow passage
3B-1 large diameter flow passage
3AT, 3AT-1 valve seats
4 valve stem engagement part actuation spring
5 pressure transmission chamber
6 valve stem engagement portion
7 spring lower end support member
7A flange of spring lower end support member
10 valve closing mechanism
11 actuator
12 actuator driving fluid supply unit
12A bottom of fluid supply section
13 valve stem operating shaft
14 shaft support member
15 transmission member
16 spring pressing part
20 elastic repulsive force vanishing device
30 seal structure
31 hollow part
31A enlarged diameter portion (area with large inner diameter)
32 C-ring
32A hollow part of C-ring
33 hollow cylinder/flange composite member
33A main body of hollow cylinder/flange composite member
33B flange of hollow cylinder-flange composite member
34 backup ring
35 O-ring
41 cam plate
41A cam surface
42 cam follower rod
42A rotating part (roller or bearing)
43 valve stem support part
50 electric motor (drive source)
51 reduction mechanism
100 shut-off valve
200 flow rate regulating valve
C central axis of valve stem, etc.

## Claims

1. A seal structure comprising a plurality of stages of combinations of:
a C-shaped member having a circular ring with a portion cut out in a circumferential direction of the circular ring;
a composite member including a hollow cylindrical portion and a flange extending radially outward on a valve body side of the hollow cylindrical portion in a central axis direction of the hollow cylindrical portion, the hollow cylindrical portion being inserted into a central hollow portion of the C-shaped member; and
a backup ring and an O-ring placed on the flange of the composite member.

2. In a shutoff valve including: a casing having a fluid flow passage formed in a central axis direction; a valve stem disposed in the flow passage and extending in the central axis direction; a valve body formed at a tip end of the valve stem; a valve seat formed in the casing near an end of the flow passage; and a valve closing mechanism for pressing the valve body against the valve seat,
said valve closing mechanism being composed of an actuator and a valve closing force adjustment mechanism, wherein said valve closing force adjustment mechanism is provided, in a pressure transmission chamber that accommodates an end of the valve stem opposite to the valve body, a valve stem actuating shaft that engages with the valve stem and is moved in the central axial direction by the actuator, and a pressure adjustment spring that is interposed between the actuator and the valve stem actuating shaft to adjust the pressing force of the valve stem actuating shaft, said seal structure claimed in claim 1 is mounted in a flow passage through which the valve stem actuating shaft extends so as to prevent fluid from flowing into the actuator side.

3. In a flow rate regulating valve including: a cam plate having a slope formed on its surface; a drive source for rotating the cam plate via a reduction mechanism; a cam follower having one of a rotating part and a moving part that is pressed against the surface of the cam plate and that moves in a direction of a central axis of the flow rate regulating valve in response to an inclination of the surface of the cam plate; and a valve stem support part having an end connected to the cam follower and another end connected to a valve stem, wherein a flow rate varies depending on a dimension of insertion of the valve stem into a small diameter portion of a flow passage, said seal structure claimed in claim 1 is mounted in a region where the valve stem extending in the central axial direction of the casing slides.
